(19)

Europäisches
Patentamt
European
Patent Office
Office européen
des brevets

(11) **EP 2 669 893 A2**

(12) **EUROPEAN PATENT APPLICATION**

(43) Date of publication:
**04.12.2013  Bulletin 2013/49**

(21) Application number: **13165204.2**

(22) Date of filing: **24.04.2013**

(51) Int Cl.:
*G11B 27/10* (2006.01)          *G11B 27/28* (2006.01)
*G11B 27/34* (2006.01)          *G06F 3/048* (2013.01)
*G10H 1/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.05.2012  KR 20120057533**

(71) Applicant: **Samsung Electronics Co., Ltd
Gyeonggi-do 443-742 (KR)**

(72) Inventors:
• **Oh, Sang-Hoon**
  **Gyeonggi-do (KR)**
• **Oh, Kyung-Seok**
  **Seoul (KR)**
• **Choi, Yong-Sun**
  **Gyeonggi-do (KR)**

(74) Representative: **Nederlandsch Octrooibureau
P.O. Box 29720
2502 LS The Hague (NL)**

(54) **Apparatus and method for high speed visualization of audio stream in an electronic device**

(57)     An electronic device and a method for high speed visualization of an audio stream are provided. The method of operating the electronic device includes extracting only header information from at least one frame included in a specific audio file, extracting a global gain value, which is an average volume of respective frames, by using the extracted frame header information, filtering the extracted global gain value, and displaying the filtered value.

```
                    START
                      │
                      ▼
        ┌─────────────────────────────┐
        │  RECEIVE COMMAND FOR        │
        │  REPRODUCING SPECIFIC AUDIO │──1101
        │  FILE                       │
        └─────────────────────────────┘
                      │
                      ▼
        ┌─────────────────────────────┐
        │  EXTRACT ONLY EACH PIECE OF │
        │  HEADER INFORMATION FROM AT │──1102
        │  LEAST ONE FRAME INCLUDED IN│
        │  SPECIFIC AUDIO FILE        │
        └─────────────────────────────┘
                      │
                      ▼
        ┌─────────────────────────────┐
        │  EXTRACT SIDE INFORMATION   │──1103
        │  FROM EXTRACTED HEADER      │
        │  INFORMATION                │
        └─────────────────────────────┘
                      │
                      ▼
        ┌─────────────────────────────┐
        │  EXTRACT GLOBAL GAIN VALUE  │
        │  BY USING INFORMATION       │──1104
        │  INCLUDED IN SIDE INFORMATION│
        └─────────────────────────────┘
                      │
                      ▼
        ┌─────────────────────────────┐
        │  FILTER EXTRACTED GLOBAL    │──1105
        │  GAIN VALUE                 │
        └─────────────────────────────┘
                      │
                      ▼
        ┌─────────────────────────────┐
        │  DISPLAY FILTERED VALUE IN  │──1106
        │  AUDIO STREAM WAVEFORM      │
        │  PATTERN                    │
        └─────────────────────────────┘
                      │
                      ▼
                    END
```

FIG.11

EP 2 669 893 A2

Printed by Jouve, 75001 PARIS (FR)

**Description**

## BACKGROUND OF THE INVENTION

1. Field of the Invention:

The present invention relates to a method of processing an audio stream and an electronic device thereof. More particularly, the present invention relates to a method for high speed visualization of an audio stream that can be displayed immediately without a time latency while satisfying a visual desire of a user.

2. Description of the Related Art:

An electronic device having a function of a media player or a recorder may display an audio stream by visualizing the audio stream. For example, when a specific audio file is reproduced in the electronic device having the media player function, a sound of the audio file which is currently being reproduced is displayed through visualization by using highs and lows of a graphic chart. Therefore, a user can enjoy the audio file currently being reproduced not only in an acoustic manner but also in a visual manner. Accordingly, the electronic device having the audio stream satisfies various demands of the user.

However, the technique of the related art has a problem in that a time latency occurs since an electronic device having an audio stream function needs to fully decode the entire audio file to be reproduced in order to display an audio stream in the electronic device.

Therefore, a need exists for a method for high speed visualization of an audio stream that can be displayed immediately without a time latency while satisfying a visual desire of a user.

The above information is presented as background information only to assist with an understanding of the present disclosure. No determination has been made, and no assertion is made, as to whether any of the above might be applicable as prior art with regard to the present invention.

## SUMMARY OF THE INVENTION

It is an object of the present invention to address at least the above-mentioned problems and/or disadvantages and to provide at least the advantages described below. A further object of the present invention is to provide an apparatus and a method for high speed visualization of an audio stream without a time latency by analyzing only a frame header instead of fully decoding the entire raw data of an audio file to be reproduced.

A further object of the present invention is to provide an apparatus and a method for visualization of an audio stream in an environment where a decoder is not provided for each format since the entire data of an audio file is not fully decoded.

A further object of the present invention is to provide an apparatus and a method for visualization of an audio stream to facilitate identification of a music section and for reproducing the audio stream by extracting only a specific part thereof.

A further object of the present invention is to provide an apparatus and a method for satisfying various desires of a user by displaying an audio stream in a waveform pattern or a specific color pattern.

In accordance with the present invention at least one of the above mentioned object is achieved by a method of operating an electronic device comprising extracting header information from at least two frames included in a specific audio file, extracting a global gain value, which is an average volume of the at least two frames, by using the extracted frame header information, filtering the extracted global gain value, and displaying the filtered values.

In an embodiment of the method, the filtering of the extracted global gain value may include connecting the respective extracted global gain value, normalizing the connected global gain value, and smoothing the normalized value.

In an embodiment of the method, the normalizing of the connected global gain value may be determined by the equation of $f'(x) = \dfrac{(x-B)(A'-B')}{A-B} + B'$.

In a further embodiment of the method, the smoothing of the normalized value may use a moving average method.

In a different embodiment of the method, the displaying of the filtered value may include displaying an entire area of the audio file in an audio stream waveform pattern.

In a still further embodiment of the method, the displaying of the entire area of the audio file in the audio stream waveform pattern may include displaying the entire area of the audio file so that the entire area can be divided into a verse, an intro, a bridge, and highlight (e.g., chorus) parts.

In a further embodiment of the method, the displaying of the entire area so that the entire area can be divided into the four parts may include confirming each peak value of the filtered value, and matching the confirmed peak value to any one of pre-set three areas.

In a further embodiment of the method, the method may further include receiving an input for reproducing only one of the four divided parts of the area, and reproducing only the input part of the area.

In a further embodiment of the method, the method may further include receiving at least one audio file selected from a plurality of stored audio files, receiving an input for reproducing only at least one area among the at least one selected audio file area, automatically skipping to only the at least one input area by analyzing a waveform of the audio stream, and orderly reproducing only the automatically skipped parts.

In a further embodiment of the method, the displaying of the filtered value may include displaying the entire area of the audio file in a color gradation.

In a further embodiment of the method, the displaying of the entire area of the audio file in the color gradation may include displaying the entire area of the audio file in first to third colors so that the entire area can be divided into a verse, an intro, a bridge, and highlight parts.

In a further embodiment of the method, the displaying of the entire area of the audio file in the first to third colors may include confirming each peak value of the filtered value, and matching the confirmed peak value to any one of pre-set three areas.

In a further embodiment of the method, the method may further include receiving an input for reproducing only one of the four divided parts of the area, and reproducing only the input part of the area.

In a further embodiment of the method, the method may further include receiving at least one audio file selected from a plurality of stored audio files, receiving an input for reproducing only at least one area among the at least one selected audio file area, automatically skipping to only the at least one input area by analyzing the color gradation, and orderly reproducing only the automatically skipped parts.

In accordance with another aspect of the present invention at least one of the above mentioned objects is achieved in an electronic device comprising a memory including software modules for extracting only header information from at least one frame included in a specific audio file and for extracting a global gain value, which is an average volume of respective frames, by using the extracted frame header information, a processor unit for filtering the extracted global gain value and executing the software modules, and a touch screen for displaying the filtered value.

In an embodiment of the invention, the touch screen may receive a command for reproducing the specific audio file.

In a further embodiment, the memory may include a side information extraction module for extracting side information from the extracted frame header information, and a filtering module for extracting the global gain value by using information included in the extracted side information.

In a further embodiment, the processor unit may connect the respective extracted global gain value, normalize the connected global gain value, and smooth the normalized value.

In a further embodiment, the processor unit may normalize the connected global gain value according to the

equation of $f'(x) = \dfrac{(x-B)(A'-B')}{A-B} + B'$.

In a further embodiment, the processor unit may perform smoothing by using a moving average method.

In a further embodiment, the touch screen may display the entire area of the audio file in an audio stream waveform pattern.

In a further embodiment, the touch screen may display the entire area of the audio file so that the entire area can be divided into a verse, an intro, a bridge, and highlight (i.e., chorus) parts.

In a further embodiment, the electronic device may further include a processor unit for confirming each peak value of the filtered value and for matching the confirmed peak value to any one of pre-set three areas.

In a further embodiment, the touch screen may receive an input for reproducing only one of the four divided parts of the area, and the electronic device may further include a processor unit for reproducing only the input part of the area.

In a further embodiment, the touch screen may receive at least one audio file selected from a plurality of stored audio files, receive an input for reproducing only at least one area among the at least one selected audio file area, automatically skip to only the at least one input area by analyzing a waveform of the audio stream, and orderly reproduce only the automatically skipped parts.

In a further embodiment, the touch screen may display the entire area of the audio file in a color gradation.

In a further embodiment, the touch screen may display the entire area of the audio file in first to third colors so that the entire area can be divided into a verse, an intro, a bridge, and highlight parts.

In a further embodiment, the electronic device may further include a processor unit for confirming each peak value of the filtered value and for matching the confirmed peak value to any one of pre-set three areas.

In a further embodiment, the touch screen may receive an input for reproducing only one of the four divided parts of the area, and the electronic device may further include a processor unit for reproducing only the input part of the area.

In a further embodiment, the touch screen may receive at least one audio file selected from a plurality of stored audio files, receives an input for reproducing only at least one area among the at least one selected audio file area, automatically skip to only the at least one input area by analyzing the color gradation, and orderly reproduce only the automatically skipped parts.

In accordance with a further aspect of the present invention at least one of the above mentioned object is achieved by a method of operating an electronic device comprising selecting at least two audio files; and reproducing each one of a verse, an intro, a bridge, and highlight parts of the at least two files successively.

In a further embodiment of the method, the method further comprises displaying extracted global gain values for reproduced frames of the at least two audio files in an audio stream waveform pattern.

Further advantageous embodiments are specified in the dependent claims.

Other aspects, advantages, and salient features of the invention will become apparent to those skilled in the art from the following detailed description, which, taken in conjunction with the annexed drawings, discloses exemplary embodiments of the invention.

## BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 illustrates an audio stream display according to an exemplary embodiment of the present invention;

FIGs. 2A and 2B illustrate extracting each piece of frame header information included in a specific audio file according to an exemplary embodiment of the present invention;

FIGs. 3A and 3B illustrate normalizing a global gain value according to an exemplary embodiment of the present invention;

FIG. 4 illustrates smoothing of a normalized value according to an exemplary embodiment of the present invention;

FIGs. 5A and 5B illustrate displaying of an audio stream in a waveform pattern according to an exemplary embodiment of the present invention;

FIGs. 6A and 6B illustrate displaying of an audio stream by using a color gradation according to an exemplary embodiment of the present invention;

FIGs. 7A and 7B illustrate receiving of an input for reproducing only a specific area according to an exemplary embodiment of the present invention;

FIGs. 8A and 8B illustrate receiving of an input for reproducing only a specific area according to an exemplary embodiment of the present invention;

FIGs. 9A through 9C illustrate reproducing of only a specific part of at least one file in an electronic device according to an exemplary embodiment of the present invention;

FIGs. 10A through 10C illustrate reproducing of only a specific part of at least one file in an electronic device according to an exemplary embodiment of the present invention;

FIG. 11 is a flowchart of displaying an audio stream in a waveform pattern according to an exemplary embodiment of the present invention;

FIG. 12 is a flowchart of displaying an audio stream in a color gradation according to an exemplary embodiment of the present invention;

FIG. 13 is a flowchart of orderly reproducing only at least any one area by analyzing a waveform of an audio stream in an electronic device according to an exemplary embodiment of the present invention;

FIG. 14 is a flowchart of orderly reproducing only at least one area by analyzing a color gradation according to an exemplary embodiment of the present invention; and

FIG. 15 is a block diagram illustrating a structure of an electronic device according to an exemplary embodiment of the present invention.

Throughout the drawings, it should be noted that like reference numbers are used to depict the same or similar elements, features, and structures.

## DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention provide an apparatus and a method for high speed visualization of an audio stream without a time latency by analyzing only a frame header instead of fully decoding the entire raw data of an audio file to be reproduced.

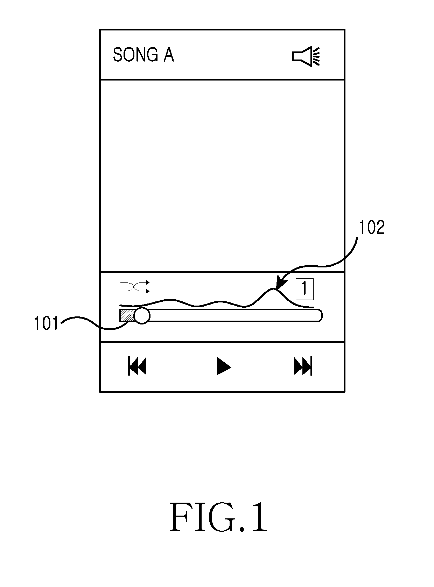

FIG. 1 illustrates an audio stream display according to an exemplary embodiment of the present invention. It is assumed that an electronic device of the present invention has a media player function. For example, it is assumed that the electronic device is capable of reproducing an audio file. Hereinafter, the audio stream of the present invention will be described.

In an exemplary embodiment of the present invention, when a specific audio file is reproduced in the electronic device, not only is the audio file reproduced but also an audio stream of the audio file currently being reproduced is displayed on a touch screen. Herein, the audio stream can be defined as a function which displays the audio file currently being reproduced in a pre-set waveform pattern or color gradation pattern so that a user can easily identify a section or the like of the audio file. More specifically, the audio stream can be visualized at a high speed based on the pre-set waveform pattern or color gradation pattern by analyzing only each frame header of at least one frame included in a specific audio file. The audio stream function-equipped electronic device of the related art experiences a time latency since the entire audio file currently being reproduced is fully decoded to display an audio stream in the electronic device. As a result, the electronic device cannot display the audio stream until the entire audio file to be reproduced is fully decoded, and thus, a desire of a user who demands fast feedback cannot be satisfied. On the other hand, the electronic device has an advantage in that the audio stream can be displayed fast by analyzing only each frame header included in a specific audio file without having to fully decode the entire audio file to be reproduced. Hereinafter, the audio stream of FIG. 1 will be described.

Referring to FIG. 1, a song A is currently being reproduced in the electronic device, and a progress bar 101 of a media player shows a reproduction position of an audio file being reproduced. In addition, an audio stream 102 is displayed in a waveform pattern. More specifically, if it is assumed that the audio stream 102 is not displayed in the waveform pattern, it is difficult for a user to recognize a location of the audio file currently being reproduced or a location of a specific part of the audio file by seeing only the progress bar 101 of the media player. For example, if it is assumed that the user reproduces the specific audio file and thereafter desires to listen to only a highlight part of the audio file, the user moves the progress bar 101 by approximately presuming the highlight part. For example, in order to move to the highlight part of the audio file, the user inevitably experiences several times of trial and error. However, as shown in the example of FIG. 1, the electronic device not only provides a fast audio stream to the user by displaying the audio stream 102 in the waveform pattern on the progress bar 101 but also facilitates easy identification of the audio file currently being reproduced. In the above example, by using the audio stream 102 displayed in the waveform pattern, the user can easily recognize that a part having a highest waveform peak is the highlight part. Therefore, the user can move the progress bar to the highlight part of the audio file without having to experience the several times of trial and error.

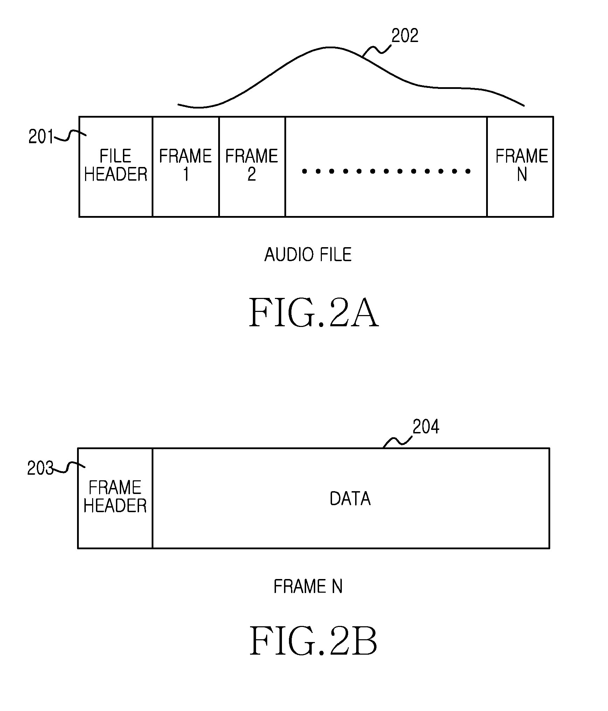

FIGs. 2A and 2B illustrate extracting each piece of frame header information included in a specific audio file according to an exemplary embodiment of the present invention.

Referring to FIGs. 2A and 2B, the audio file includes a file header 201 and at least one frame 202. In addition, each frame includes a frame header 203 and data 204.

FIG. 2A illustrates a configuration of the audio file according to an exemplary embodiment of the present invention. More specifically, the audio file has the file header 201 located in a front part of the audio file, and the file header 201 includes the number of frames included in the audio file, tagging information, and the like. For example, the file header 201 of the audio file includes information regarding the total number of frames currently included in the audio file and tagging information (e.g., an artist, a title, album information, or the like) of the audio file.

FIG. 2B illustrates a configuration of any one of the respective frames included in the audio file according to an exemplary embodiment of the present invention. More specifically, the frame header 203 is located in a front part of the specific frame, and the frame header 203 includes a data size, decoding information, or the like, of the data 204 included in the frame. For example, the header 203 of the specific frame includes the data size, an encoding compression option, bit rate information, side information, and the like.

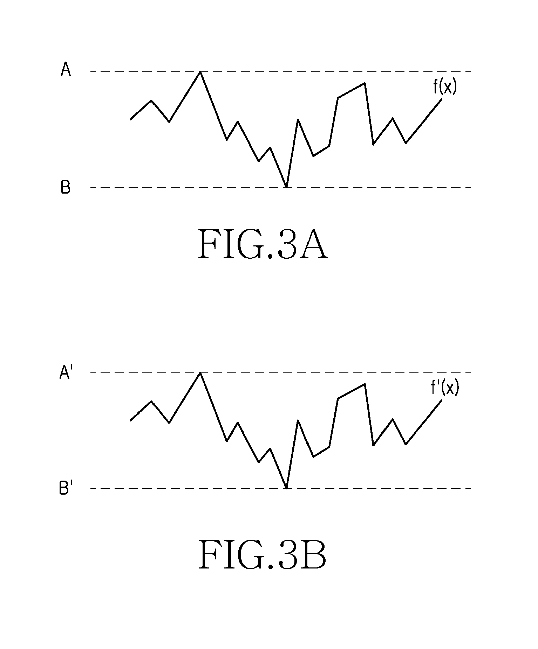

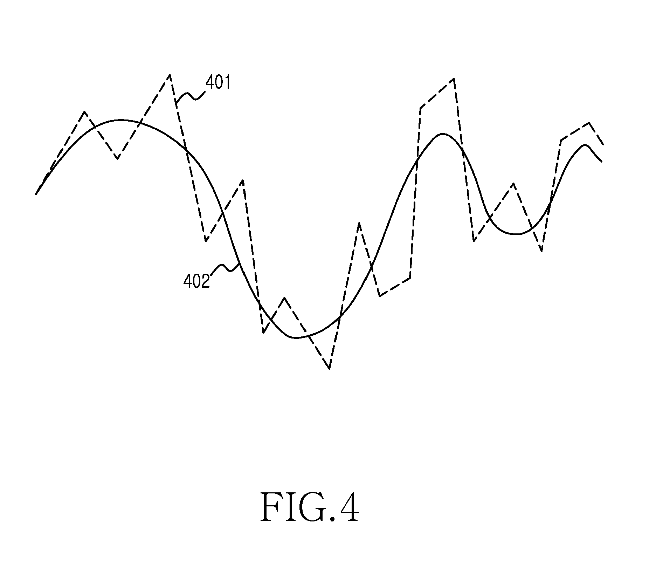

Hereinafter, a process of extracting header information of each frame included in the specific audio file will be described. First, the electronic device receives a command for reproducing the specific audio file from the user. Thereafter, the electronic device extracts only information of the header 203 of each frame among at least one frame 202 included in the audio file for which the command for reproducing the audio file is received from the user. For example, the information of the frame header 203 included in each of the plurality of frames 202 included in the audio file to be reproduced by the electronic device is extracted. More specifically, side information is extracted from the information included in the frame header 203 and a global gain value, which is an average volume of respective frames, is extracted. After the electronic device extracts the global gain value which is the average volume of respective frames, the electronic device connects the extracted global gain values, normalizes the connected global gain values, and smoothes the normalized values. The normalization and smoothing process will be described below with reference to FIGs. 3A and 3B and FIG. 4. Herein, the average volume of the frames indicates an average signal size of a plurality of pieces of data included in the frame. The pieces of data are audio signals. For example, the global gain value is a representative value for each frame which represents an average signal size of audio signals included in each frame. A volume (or level) of each frame can be adjusted while varying the global gain value.

FIGs. 3A and 3B illustrate normalizing a global gain value according to an exemplary embodiment of the present invention. FIG. 3A illustrates a graph before normalization, and FIG. 3B illustrates a graph after normalization according to an exemplary embodiment of the present invention.

Referring to FIGs. 3A and 3B, first, as described above with reference to FIGs. 2A and 2B, the electronic device receives a command for reproducing a specific audio file from a user. Upon receiving the command for reproducing the specific audio file, the electronic device extracts only each piece of frame header information from at least one frame included in the audio file. Thereafter, the electronic device extracts side information from information included in each frame header, extracts a global gain value which is an average volume of respective frames, and connects the respective extracted global gain value. For example, f(x) of FIG. 3A illustrates a graph after connecting the respective extracted global gain values.

More specifically, f'(x) of FIG. 3B illustrates a graph obtained by normalizing f(x) of FIG. 3A. Referring to FIG. 3B, comparing f'(x) and f(x), the two graphs have the same pattern. However, the y-axis is in the range of A to B before normalization, whereas the range of the y-axis is decreased to the range of A' to B' after normalization. Herein, the range of the y-axis refers to a dynamic range which represents a difference between a minimum peak value and a maximum peak value. For example, although the dynamic range may be from A to B before normalization, the dynamic range is decreased to the range from A' to B' after normalization. As described above, normalization is performed by decreasing the dynamic range because a great memory capacity is required for data processing in a case of data having a great dynamic range. For example, a normalization task is required to decrease the dynamic range of the graph f(x) before normalization. Herein, normalization of the global gain value can be determined by Equation (1) below.

$$f'(x) = \frac{(x-B)(A'-B')}{A-B} + B' \qquad ......(1)$$

Herein, f'(x) denotes a normalized value after connecting the respective global gain values, A denotes a maximum peak value before normalization, B denotes a minimum peak value before normalization, A' denotes a maximum peak value after normalization, and B' denotes a minimum peak value after normalization.

For example, an exemplary embodiment of the present invention performs normalization by connecting the respective extracted global gain values, because in doing so, a less memory capacity is required when the electronic device performs data processing by the use of normalization of the graph f'(x) according to Equation (1) above, if an audio file (i.e., raw data) before decoding has a great range from A to B.

FIG. 4 illustrates smoothing of a normalized value according to an exemplary embodiment of the present invention.

Referring to FIG. 4, the normalized value is first smoothed so that data 401 with an angular pattern before smoothing is filtered by using a moving average method and thus, is displayed in a smoothed graph 402. As described with reference to FIGs. 3A and 3B, the process of smoothing the normalized value is included in the process of filtering each extracted global gain value. More specifically, the process of filtering each extracted global gain value includes a process of connecting the respective extracted global gain values, a process of normalizing the connected global gain values, and a process of smoothing the normalized values. For example, the process of smoothing the normalized value to be described with reference to FIG. 4 is included in the process of filtering the respective extracted global gain values. Hereinafter, the concept of a moving average for smoothing a normalized value will be described. The moving average is an average of a specific number of only recently measured values, and can be defined as an average of only recent values without considering previous data. More specifically, it is a method of obtaining an tangent line by connecting average values of a specific number of measured values prior or next to a certain measured value, with respect to each measured value of a time series. The aforementioned moving average method is advantageous in terms of easy understanding and easy calculation. For example, exemplary embodiments of the present invention can smooth the normalized values to the moving average.

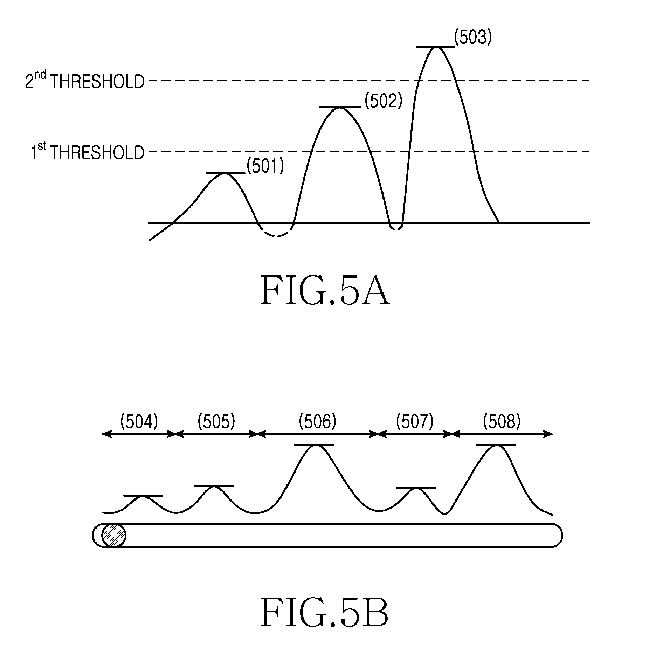

FIGs. 5A and 5B illustrate displaying of an audio stream in a waveform pattern according to an exemplary embodiment of the present invention. FIG. 5A illustrates confirming of a peak value of a filtered value and matching it to any one pre-set area according to an exemplary embodiment of the present invention.

Referring to FIG. 5A, an electronic device filters each extracted global gain value, confirms each peak value of the filtered value, and matches the confirmed peak value to any one of three pre-set areas. More specifically, the electronic device connects the respective extracted global gain values, normalizes the connected global gain values, and smoothes the normalized values. The completion of the normalization and smoothing process implies the completion of filtering of the extracted global gain value. Thereafter, the electronic device confirms each filtered value and matches it to any one of pre-set areas. For example, when a 1st threshold and a 2nd threshold are determined by a user, the electronic device confirms each peak value of the filtered value. First, if a filtered peak value 501 is less than the 1st threshold, a corresponding part may be a verse part or a bridge part in the entire audio file. In addition, if a filtered peak value 502 is greater than or equal to the 1st threshold and is less than the 2nd threshold, the corresponding part may be an intro part in the entire audio file. In addition, if a filtered peak value 503 is greater than or equal to the 2nd threshold, the corresponding part may be a highlight (e.g., a chorus) part in the entire audio file. Each audio file may not be clearly divided into the verse, the intro, the bridge, and the highlight parts and a specific part of a certain audio file may be omitted. However, most audio files may be divided into four parts as described above. For example, the electronic device can confirm each peak value of the filtered value, and can divide the entire audio file into the verse, the intro, the bridge, and the highlight parts. Herein, the verse and bridge parts have the same peak value less than or equal to the 1st threshold. However, the electronic device classifies a first part, of which the peak value of the filtered value is confirmed to be less than or equal to the 1st threshold, as the verse part and classifies a next confirmed part as the bridge part. Therefore, as described above, a part of which the peak value 501 of the filtered value is less than or equal to the 1st threshold may be the verse or the bridge part.

FIG. 5B illustrates displaying of an audio stream in a waveform pattern in a touch screen of an electronic device according to an exemplary embodiment of the present invention. As described above with reference to FIG. 5A, the electronic device confirms a peak value of a filtered value and thus, displays the entire audio file so that a user can easily identify a specific part among a verse, an intro, a bridge, and highlight parts.

Referring to FIG. 5B, the electronic device can display the entire audio file in a waveform pattern. For example, the entire audio file can be displayed in a waveform pattern of an audio stream on a progress bar shown in FIG. 5B. More specifically, the user can know that a first start part of the audio file is a verse part 504, and can know that a part which comes after the verse part 504 and which shows a higher peak value than the verse part 504 is an intro part 505 which is a part including a first voice, and can confirm that a part which shows a highest peak value is a highlight part 506 of the audio file. In addition, the user can know that a part which comes after the highlight part 506 and of which a peak value is displayed to be low is a bridge part 507, and can confirm that a part which shows a higher peak value again is a highlight part 508. As described above, the electronic device can display an audio stream in a waveform pattern without a time latency by using only each piece of frame header information instead of decoding the entire data of a specific audio file instructed to be reproduced by the user, and also can allow the user to easily identify a section of the entire audio file by seeing the waveform of the audio stream.

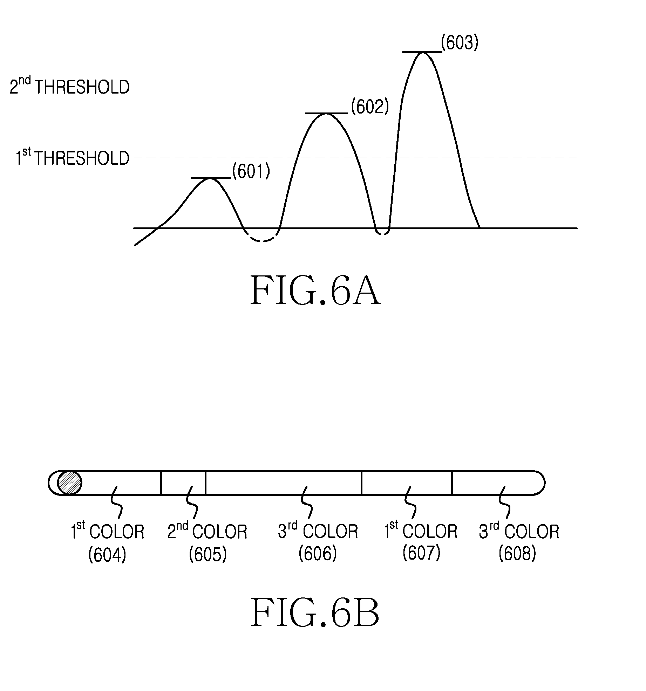

FIGs. 6A and 6B illustrate displaying of an audio stream by using a color gradation according to an exemplary embodiment of the present invention. FIG. 6A illustrates confirming of a peak value of a filtered value and matching it to any one pre-set color according to an exemplary embodiment of the present invention.

Referring to FIG. 6A, an electronic device filters each extracted global gain value, confirms each peak value of the filtered value, and matches the confirmed peak value to any one of three pre-set colors. More specifically, the electronic device connects the respective extracted global gain values, normalizes the connected global gain values, and smoothes the normalized values. The completion of the normalization and smoothing process implies the completion of filtering of the extracted global gain value. Thereafter, the electronic device confirms each filtered value and matches it to any one of pre-set colors. For example, when a 1st threshold and a 2nd threshold are determined by a user, the electronic device confirms each peak value of the filtered value. First, if a filtered peak value 601 is less than the 1st threshold, a corresponding part may be a verse part or a bridge part in the entire audio file. In addition, if a filtered peak value 602 is greater than or equal to the 1st threshold and is less than the 2nd threshold, the corresponding part may be an intro part in the entire audio file. In addition, if a filtered peak value 603 is greater than or equal to the 2nd threshold, the corresponding part may be a highlight part in the entire audio file. Each audio file may not be clearly divided into the verse, the intro, the bridge, and the highlight parts and a specific part of a certain audio file may be omitted. However, most audio files may be divided into four parts as described above. For example, the electronic device can confirm each peak value of the filtered value, and can divide the entire audio file into the verse, the intro, the bridge, and the highlight parts. Herein, the verse and bridge parts have the same peak value less than or equal to the 1st threshold. However, the electronic device classifies a first part, of which the peak value of the filtered value is confirmed to be less than or equal to the 1st threshold, as the verse part and classifies a next confirmed part as the bridge part. Therefore, as described above, a part of which the peak value 601 of the filtered value is less than or equal to the 1st threshold may be the verse or the bridge part.

FIG. 6B illustrates displaying of an audio stream in a touch screen of an electronic device by using a color gradation according to an exemplary embodiment of the present invention. As described above with reference to FIG. 6A, the electronic device confirms a peak value of a filtered value and thus, displays the entire audio file so that a user can easily identify a specific part among the verse, the intro, the bridge, and the highlight parts.

Referring to FIG. 6B, the electronic device can display the entire audio file in a color gradation pattern. For example, the entire audio file can be displayed in a color gradation pattern of an audio stream on a progress bar shown in FIG. 6B. More specifically, the user can know that a first color 604 displayed on the progress bar is a verse part which is a first start part, can know that a part which comes after the first color 604 and which is displayed with a second color 605 is an intro part including a first voice, and can confirm that a part which comes after the second color 605 and which is displayed with a third color 606 is a first highlight part of the audio file. In addition, the user can know that a part which comes after the third color 606 and which is displayed again with a first color 607 is a bridge part, and can confirm that a part which is displayed again with a third color 608 is a second highlighted part. For example, since a section of one audio file can be divided into the verse, the intro, the bridge, and the highlight parts, the user can easily know that a part displayed with the first color 604 is a verse part, a part displayed with the second color 605 after the first color 604 is displayed is an intro part, a part displayed with the third color 606 after the second color 605 is displayed is a first highlight part, a part displayed with the first color 607 is a bridge part, and a part displayed with the third color 608 is a second highlight part. As described above, the electronic device can display an audio stream in a color gradation pattern without a time latency by using only each piece of frame header information instead of decoding the entire data of a specific audio file instructed to be reproduced by the user, and also can allow the user to easily identify a section of the entire audio file by seeing the color gradation of the audio stream.

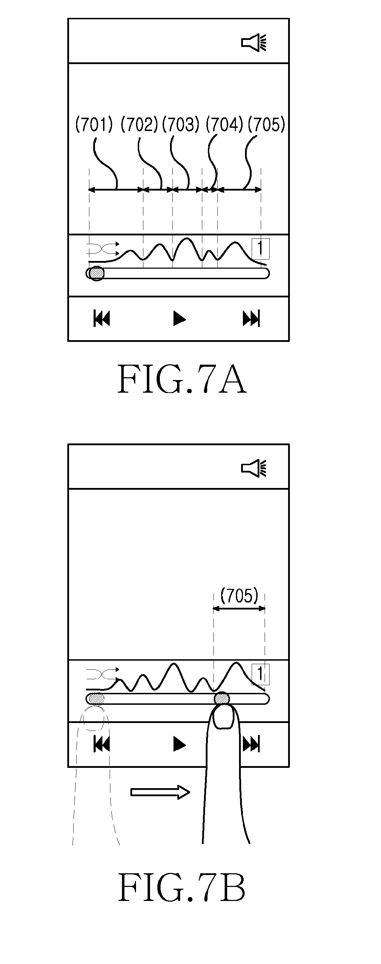

FIGs. 7A and 7B illustrate receiving of an input for reproducing only a specific area according to an exemplary embodiment of the present invention. FIG. 7A illustrates displaying of an audio stream in a waveform pattern according to an  exemplary embodiment of the present invention.

Referring to FIG. 7A, the electronic device can display the audio stream in the waveform pattern. More specifically, upon receiving a command for reproducing a specific audio file from a user, the electronic device can display an audio stream rapidly by extracting only each piece of frame header information from at least one frame of the audio file. In the audio stream displayed in the waveform pattern in FIG. 7A according to the exemplary embodiment of the present invention, a section of the entire audio file is displayed in a waveform pattern on a progress bar included in a media player. As shown in FIG. 7A, the audio file starts from a verse part 701, followed by an intro part 702 including a voice. The intro part 702 is followed by a first highlight part 703. The first highlight part 703 is followed by a bridge part 704, followed by a second highlight part 705 and the end of the audio file. For example, the electronic device can display an audio stream in a waveform pattern rapidly without a time latency by using only each piece of frame header information instead of decoding the entire data of a specific audio file instructed to be reproduced by the user, and also can allow the user to easily identify a section of the entire audio file by seeing the waveform of the audio stream.

FIG. 7B illustrates displaying of only a specific area by using a waveform pattern of a displayed audio stream according to an exemplary embodiment of the present invention.

Referring to FIG. 7B, a section of a specific audio file currently being reproduced is displayed in a waveform pattern on a progress bar of a media player. As described with reference to FIG. 7A, the electronic device displays a section of a specific audio file in a waveform pattern, and thus, there is an advantage in that the section of the audio file currently being displayed can be easily identified. Hereinafter, an example of displaying only a specific area by using a waveform pattern of a displayed audio stream will be described with reference to FIG. 7B. First, if the electronic device receives a command for reproducing a specific audio file, the electronic device can display a section of the audio file rapidly in a waveform pattern, without having to decode the entire audio file, by extracting only frame header information included in at least one frame of the audio file to be reproduced. For  example, the user can easily identify the entire section of the audio file by seeing that the audio stream is displayed in a waveform pattern. Assume that the user desires to listen to only a specific part called a highlight part instead of listening to the audio file from the beginning. By seeing the audio stream displayed in the waveform pattern on the progress bar of the media player, the user can directly move the progress bar to a highlight part 705 of the audio file currently being reproduced. For example, as described above, since the electronic device displays the audio stream such that the entire section of the audio file can be confirmed at a glance, the user can move the progress bar to a desired part, i.e., the highlight part 705. In the related art, the audio stream is not provided so that the user can easily recognize the section of the audio file currently being displayed. Therefore, there is a problem in that the user inevitably experiences several times of trial and error to reproduce the audio file starting from a specific part as described in the above example. However, since the entire section of the audio file is displayed in the waveform pattern on the progress bar, there is an advantage in that the user can move the progress bar to a desired part without having to experience several times of trial and error.

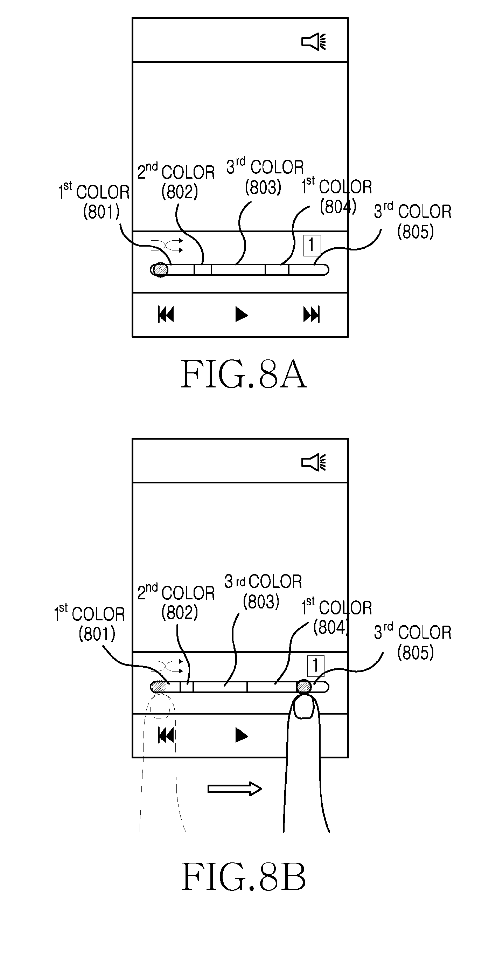

FIGs. 8A and 8B illustrate receiving of an input for reproducing only a specific area according to an exemplary embodiment of the present invention. FIG. 8A illustrates displaying of an audio stream in a color gradation according to an exemplary embodiment of the present invention.

Referring to FIG. 8A, the electronic device can display the audio stream in the color gradation. More specifically, upon receiving a command for reproducing a specific audio file from a user, the electronic device can display an audio stream rapidly by extracting only each piece of frame header information from at least one frame of the audio file. In the audio stream displayed in the color gradation in FIG. 8A according to the exemplary embodiment of the present invention, a section of the entire audio file is displayed in first to third colors on a progress bar included in a media player. As shown in FIG. 8A, the audio file starts from a verse part (first color) 801, followed by an intro part (second color) 802 including a voice. The intro part 802 is followed by a first highlight part (third color) 803. The first highlight part 803 is followed by a bridge part (first color) 804, followed by a second highlight part (third color) 805 and the end of the audio file. For example, the electronic device can display an audio stream in a color gradation rapidly without a time latency by using only each piece of frame header information instead of decoding the entire data of a specific audio file instructed to be reproduced by the user, and also can allow the user to easily identify a section of the entire audio file by seeing only the color of the audio stream.

FIG. 8B illustrates displaying of only a specific area by using an audio stream displayed in a color gradation according to an exemplary embodiment of the present invention.

Referring to FIG. 8B, a section of a specific audio file currently being reproduced is displayed in first to third colors on a progress bar of a media player. As described with reference to FIG. 8A, the electronic device displays a section of a specific audio file in a color gradation, and thus, there is an advantage in that the section of the audio file currently being displayed can be easily identified. Hereinafter, an example of displaying only a specific area by using a color gradation of a displayed audio stream will be described with reference to FIG. 8B. First, if the electronic device receives a command for reproducing a specific audio file, the electronic device can display a section of the audio file rapidly in first to third colors, without having to decode the entire audio file, by extracting only frame header information included in at least one frame of the audio file to be reproduced. For example, the user can easily identify the entire section of the audio file by seeing only the color of the displayed audio stream. Assume that the user desires to listen to only a specific part called a highlight part instead of listening to the audio file from the beginning. By seeing an audio stream displayed in first to third colors on the progress bar of the media player, the user can directly move the progress bar to a second highlight part 805 of the audio file currently being reproduced. For example, as described above, since the electronic device displays the audio stream such that the entire section of the audio file can be confirmed at a glance, the user can move the progress bar to a desired part, i.e., the highlight part 805. In the related art, the audio stream is not provided so that the user can easily recognize the section of the audio file currently being displayed. Therefore, there is a problem in that the user inevitably experiences several times of trial and error to reproduce the audio file starting from a specific part as described in the above example. However, since it is displayed in a specific color on the progress bar, there is an advantage in that the user can move the progress bar to a desired part without having to experience several times of trial and error. For example, the entire audio file can be displayed in the color gradation of the audio stream on the progress bar shown in FIG. 8B. More specifically, the user can know that a first color 801 displayed on the progress bar is a verse part which is a first start part, can know that a part which comes after the first color 801 and which is displayed with a second color 802 is an intro part including a first voice, and can confirm that a part which comes after the second color 802 and which is displayed with a third color 803 is a first highlight part of the audio file. In addition, the user can know that a part which comes after the third color 803 and which is displayed again with a first color 804 is a bridge part, and can confirm that a part which is displayed with a third color 805 is a second highlighted part.

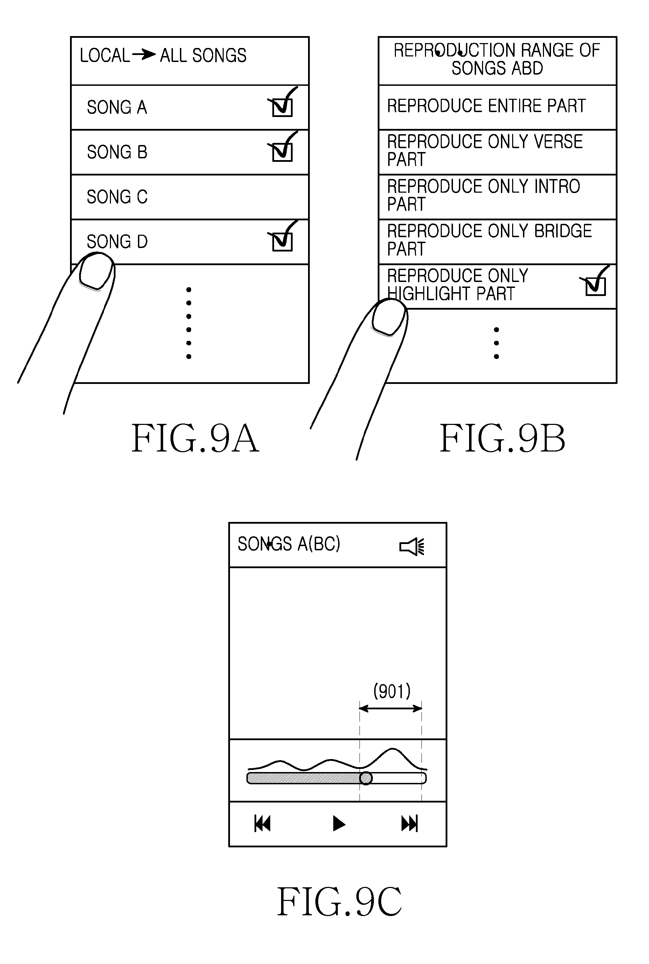

FIGs. 9A through 9C illustrate reproducing of only a specific part of at least one file in an electronic device according to an exemplary embodiment of the present invention. FIG. 9A illustrates selecting of at least one file from audio files stored in the electronic device according to an exemplary embodiment of the present invention.

Referring to FIG. 9A, the electronic device can receive at least one file selected by a user from the audio files stored in the electronic device. For example, it is assumed that, when a plurality of audio files are stored in the electronic device, the user intends to reproduce a file by selecting at least one file from the plurality of audio files stored in the electronic device. First, when the electronic device receives a local part selected by the user, the electronic device displays all audio files currently stored therein. Thereafter, as shown in the example of FIG. 9A, songs A, B, and D can be selected by a user touch from the total audio files stored in the electronic device. For example, the user can select a specific song by a touch from all audio files stored locally in the electronic device. In the example of FIG. 9A according to the exemplary embodiment, the at least one audio file is selected by the user touch. Although at least one audio file is selected by the user touch in FIG. 9A, it is apparent that the at least one audio file can also be selected by receiving a specific command instead of the user  touch.

FIG. 9B illustrates selecting of a reproduction range of an audio file selected in an electronic device according to an exemplary embodiment of the present invention.

Referring to FIG. 9B, when at least one audio file is selected from audio files stored in the electronic device as described with reference to FIG. 9A, in order to select a reproduction range of at least one audio file selected by the user, the electronic device displays the reproduction range of the selected at least one audio file so that the reproduction range can be selected. For example, if the songs A, B, and D are selected by the user in the electronic device in the above example, the electronic device specifically displays reproduction ranges of the selected songs A, B, and C. As shown in FIG. 9B, a specific part (e.g., the entire part, only a verse part, only an intro part, only a bridge part, and only a highlight part) is displayed. For example, the user can select a desired part from the reproduction range of the selected songs displayed on the touch screen of the electronic device, so that only the desired part is reproduced. If the user desires to listen to only the highlight part, what the user has to do is to select only the "highlight part" from the specific parts displayed in the electronic device.

Referring to FIG. 9C, it illustrates orderly reproducing of only at least one area selected by analyzing a waveform of an audio stream in an electronic device according to an exemplary embodiment of the present invention. More specifically, the electronic device receives a command for reproducing only at least one area among the at least one selected audio file area from the user, analyzes a waveform of an audio stream, and orderly reproduces only a corresponding part by automatically skipping to at least one input area. In the above example, if the electronic device receives an input for reproducing only a highlight part 901 of songs A, B, and D selected by the user, the electronic device automatically skips to the highlight part 901 of the songs A, B, and D and reproduces only the highlight part 901 of the songs A, B, and D. In the related art, there is no method capable of reproducing only a specific part of an audio file and exemplary embodiments of the present invention propose a method capable of reproducing only a specific part of at least one audio file as described above, and thus, advantageously satisfy various desires of the user. Although not shown in FIGs. 9A through 9C, for example, when the user intends to reproduce both of a verse part and a highlight part of the songs A, B, and D, if the user simultaneously selects the "verse part" and the "highlight part" in a specific reproduction range, the electronic device orderly reproduces only the "verse part" and the "highlight part" of the songs A, B, and D.

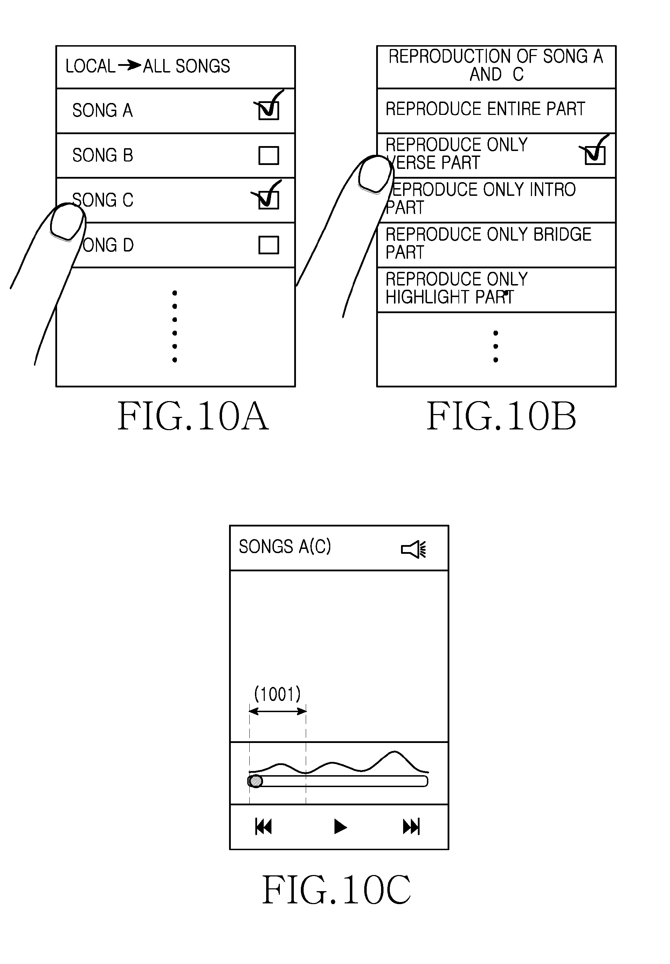

FIGs. 10A through 10C illustrate reproducing of only a specific part of at least one file in an electronic device according to an exemplary embodiment of the present invention. FIG. 10A illustrates selecting of at least one file from audio files stored in the electronic device according to an exemplary embodiment of the present invention.

Referring to FIG. 10A, the electronic device can receive at least one file selected by a user from the audio files stored in the electronic device. For example, it is assumed that, when a plurality of audio files are stored in the electronic device, the user intends to reproduce a file by selecting at least one file from the plurality of audio files stored in the electronic device. First, when the electronic device receives a local part selected by the user, the electronic device displays all audio files currently stored therein. Thereafter, as shown in the example of FIG. 10A, songs A and C can be selected by a user touch from the total audio files stored in the electronic device. For example, the user can select a specific song by a touch from all audio files stored locally in the electronic device. In the example of FIG. 10A according to the exemplary embodiment of the present invention, the at least one audio file is selected by the user touch. Although at least one audio file is selected by the user touch in FIG. 10A, it is apparent that the at least one audio file can also be selected by receiving a specific command instead of the user touch.

FIG. 10B illustrates selecting of a reproduction range of an audio file selected in an electronic device according to an exemplary embodiment of the present invention.

Referring to FIG. 10B, when at least one audio file is selected from audio files stored in the electronic device as described with reference to FIG. 10A, in order to select a reproduction range of at least one audio file selected by the user, the electronic device displays the reproduction range of the selected at least one audio file  so that the reproduction range can be selected. For example, if the songs A and C are selected by the user in the electronic device in the above example, the electronic device specifically displays reproduction ranges of the selected songs A and C. As shown in FIG. 10B, a specific part (e.g., the entire part, only a verse part, only an intro an intro part, only a bridge part, and only a highlight part) is displayed. For example, the user can select a desired part from the reproduction range of the selected songs displayed on the touch screen of the electronic device, so that only the desired part is reproduced. If the user desires to listen to only the verse part, what the user has to do is to select only the "verse part" from the specific parts displayed in the electronic device.

Referring to FIG. 10C, it illustrates orderly reproducing only at least one area selected by analyzing a gradation of an audio stream in an electronic device according to an exemplary embodiment of the present invention. More specifically, the electronic device receives from a user a command for reproducing only at least one area selected from the at least one audio file area, analyzes an audio stream displayed in a color gradation, and orderly reproduces only a corresponding part by automatically skipping to at least one input area. In the above example, if the electronic device receives an input for reproducing only a verse part 1001 of the songs A and C selected by the user, the electronic device automatically skips to the verse part 1001 of the songs A and C and reproduces only the verse part 1001 of the songs A and C. In the related art, there is no method capable of reproducing only a specific part of an audio file and exemplary embodiments of the present invention propose a method capable of reproducing only a specific part of at least one audio file as described above, and thus, advantageously satisfy various desires of the user. Although not shown in FIGs. 10A through 10C, for example, when the user intends to reproduce both of a verse part and a highlight part of the songs A and C, if the user simultaneously selects the "verse part" and the "highlight part" in a specific reproduction range, the electronic device orderly reproduces only the "verse part" and the "highlight part" of the songs A and C.

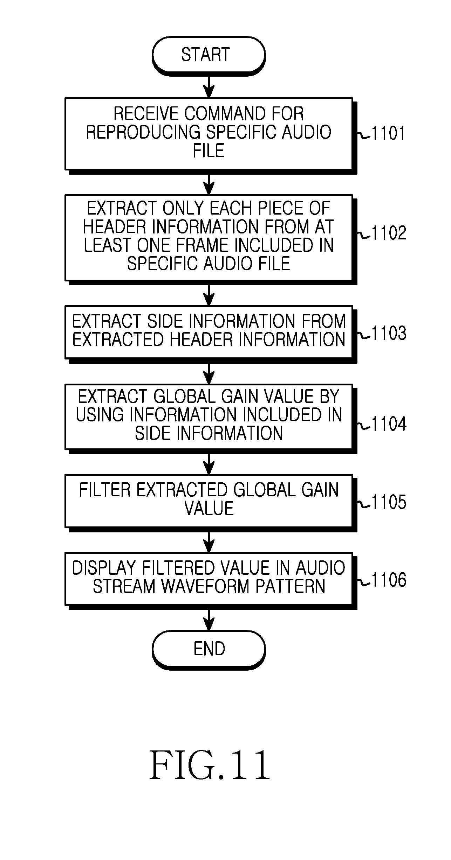

FIG. 11 is a flowchart of displaying an audio stream in a waveform pattern according to an exemplary embodiment of the present invention.

Referring to FIG. 11, an electronic device receives a command for reproducing a specific audio file in step 1101. More specifically, the electronic device receives from a user a command for reproducing a specific file selected from at least one audio file stored locally. For example, it is assumed that, when a plurality of audio files are stored in the electronic device, the user intends to reproduce a file by selecting a specific audio file from the plurality of audio files stored in the electronic device. First, when the electronic device receives a local part selected by the user, the electronic device displays all audio files currently stored therein. Thereafter, any one audio file can be selected by a user touch from the total audio files in the electronic device. For example, the user can select a specific song by a touch from all audio files stored locally in the electronic device.

Upon receiving a command for reproducing a specific audio file, the electronic device extracts only each piece of header information from at least one frame included in the specific audio file in step 1102. More specifically, the audio file may consist of a file header and at least one frame. In addition, each frame may consist of a frame header and data. For example, upon receiving a command for reproducing a specific audio file, the electronic device extracts only each piece of header information from at least one frame included in the audio file instead of decoding the entire data of the specific audio file.

After extracting only each piece of header information from the at least one frame included in the specific audio file, the electronic device extracts side information from the extracted header information in step 1103. More specifically, a frame header is located in a front part of a specific frame, and the frame header includes a data size of data included in the frame, decoding information, and the like. For example, the header of the specific frame includes a data size of the frame, an encoding compression option, bit-rate information, side information, and the like. Herein, the electronic device extracts the side information included in the frame header.

After extracting the side information from the extracted header information, the electronic device extracts a global gain value by using information included in the side information in step 1104. More specifically, a global gain value which is an average volume of the respective frames is extracted by extracting the side information from the information included in the frame header. Herein, the global gain value can be defined as the average volume of the respective frames of the side information extracted from the information included in the frame.

Thereafter, the electronic device filters the extracted global gain value in step 1105. More specifically, if the global gain value which is the average volume of the respective frames is extracted in the electronic device, the electronic device connects the extracted global gain values, normalizes the connected global gain values, and smoothes the normalized values. For example, a process of filtering the extracted global gain value may include a process of connecting the extracted global gain values, a process of normalizing the connected global gain values, and a process of smoothing the normalized values. Herein, the connected global gain values are normalized because a great memory capacity is required for data processing in a case of data having a great dynamic range. In addition, the normalized value is smoothed in order to display data in an angular pattern by filtering the value according to a moving average method.

After filtering the extracted global value, the electronic device displays the filtered value in an audio stream waveform pattern in step 1106. More specifically, the electronic device confirms a peak value of the filtered value and displays the entire audio file so that the user can easily identify a specific part among the verse, the intro, the bridge, and the highlight parts. For example, the user can know that a first start part of the audio file is a verse part, and can know that a part which comes after the verse part and which shows a higher peak value than the verse part is an intro part, which is a part including a first voice, and can confirm that a part which shows a highest peak value is a highlight part of the audio file. In addition, the user can know that a part which comes after the highlight part and of which a peak value is displayed to be low is a bridge part, and can confirm that a part which shows a higher peak value again is a highlight part. As described above, the electronic device can display an audio stream in a waveform pattern without a time latency by using only each piece of frame header information instead of decoding the entire data of a specific audio file instructed to be reproduced by the user, and also can allow the user to easily identify a  section of the entire audio file by seeing the waveform of the audio stream.

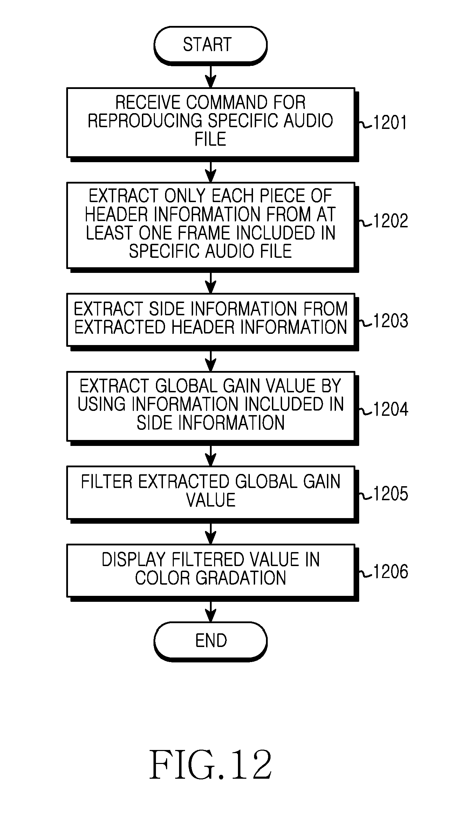

FIG. 12 is a flowchart of displaying an audio stream in a color gradation according to an exemplary embodiment of the present invention.

Referring to FIG. 12, an electronic device receives a command for reproducing a specific audio file in step 1201. More specifically, the electronic device receives from a user a command for reproducing a specific file selected from at least one audio file stored locally. For example, it is assumed that, when a plurality of audio files are stored in the electronic device, the user intends to reproduce a file by selecting a specific audio file from the plurality of audio files stored in the electronic device. First, when the electronic device receives a local part selected by the user, the electronic device displays all audio files currently stored therein. Thereafter, any one audio file can be selected by a user touch from the total audio files in the electronic device. For example, the user can select a specific song by a touch from all audio files stored locally in the electronic device.

Upon receiving the command for reproducing the specific audio file, the electronic device extracts only each piece of header information from at least one frame included in the specific audio file in step 1202. More specifically, the audio file may consist of a file header and at least one frame. In addition, each frame may consist of a frame header and data. For example, upon receiving the command for reproducing the specific audio file, the electronic device extracts only each piece of header information from at least one frame included in the audio file instead of decoding the entire data of the specific audio file.

After extracting only each piece of header information from the at least one frame included in the specific audio file, the electronic device extracts side information from the extracted header information in step 1203. More specifically, a frame header is located in a front part of a specific frame, and the frame header includes a data size of data included in the frame, decoding information, and the like. For example, the header of the specific frame includes a data size of the frame, an encoding compression option, bit-rate information, side information, and the like. Herein, the electronic device extracts the side information included in the frame header.

After extracting the side information from the extracted header information, the electronic device extracts a global gain value by using information included in the side information in step 1204. More specifically, a global gain value which is an average volume of the respective frames is extracted by extracting the side information from the information included in the frame header. Herein, the global gain value can be defined as the average volume of the respective frames of the side information extracted from the information included in the frame.

Thereafter, the electronic device filters the extracted global gain value in step 1205. More specifically, if the global gain value which is the average volume of the respective frames is extracted in the electronic device, the electronic device connects the extracted global gain values, normalizes the connected global gain values, and smoothes the normalized values. For example, a process of filtering the extracted global gain value may include a process of connecting the extracted global gain values, a process of normalizing the connected global gain values, and a process of smoothing the normalized values. Herein, the connected global gain values are normalized because a great memory capacity is required for data processing in a case of data having a great dynamic range. In addition, the normalized value is smoothed in order to display data in an angular pattern by filtering the value according to a moving average method.

After filtering the extracted global value, the electronic device displays the filtered value in a color gradation in step 1206. More specifically, the electronic device confirms a peak value of the filtered value and displays the entire audio file in a color gradation so that the user can easily identify a specific part among the verse, the intro, the bridge, and the highlight parts. For example, the user can know that a first color displayed on a progress bar is a verse part which is a first start part, can know that a part which comes after the first color and which is displayed with a second color is an intro part including a first voice, and can confirm that a part which comes after the second color and which is displayed with a third color is a first highlight part of the audio file. In addition, the user can know that a part which comes after the third color and which is displayed again with a first color is a bridge part, and can confirm that a part which is displayed with a third color is a second highlighted part. For example, since a section of one audio file can be divided into the verse, the intro, the bridge, and the highlight parts, the user can easily know that a part displayed with the first color is a verse part, a part displayed with the second color after the first color is displayed is an intro part, a part displayed with the third color after the second color is displayed is a first highlight part, a part displayed with the first color is a bridge part, and a part displayed with the third color is a second highlight part. According to an exemplary embodiment of the present invention, the electronic device can display an audio stream in a color gradation pattern without a time latency by using only each piece of frame header information instead of decoding the entire data of a specific audio file instructed to be reproduced by the user, and also can allow the user to easily identify a section of the entire audio file by seeing the color gradation of the audio stream.

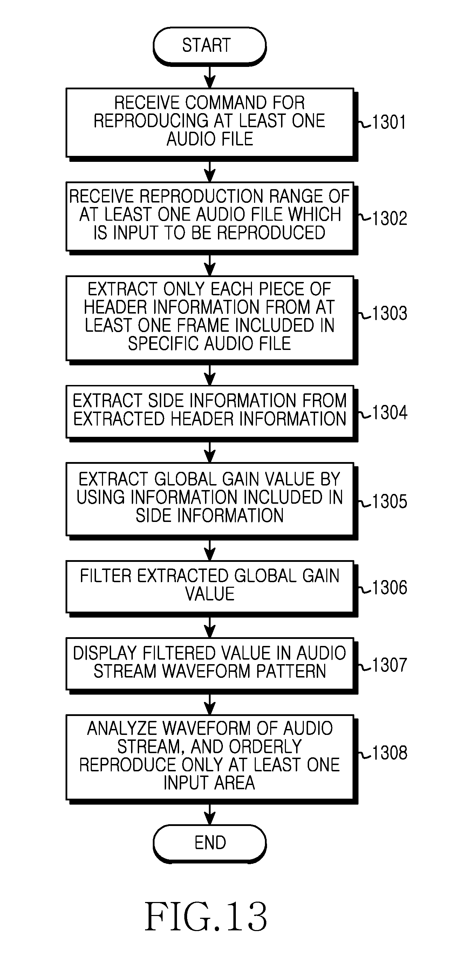

FIG. 13 is a flowchart of orderly reproducing only at least any one area by analyzing a waveform of an audio stream in an electronic device according to an exemplary embodiment of the present invention.

Referring to FIG. 13, the electronic device receives a command for reproducing at least one audio file in step 1301. More specifically, the electronic device receives from a user a command for reproducing at least one audio file selected from at least one audio file stored locally. For example, it is assumed that, when a plurality of audio files are stored in the electronic device, the user intends to reproduce a file by selecting at least one file from the plurality of audio files stored in the electronic device. First, when the electronic device receives a local part selected by the user, the electronic device displays all audio files currently stored therein. Thereafter, at least one audio file can be selected by a user touch from all audio files stored in the electronic device. For example, the user can select at least one song from all audio files stored locally in the electronic device.

Upon receiving a command for reproducing at least one audio file, the electronic device receives a reproduction range of at least one audio file which is input to be reproduced in step 1302. More specifically, in order to select a reproduction range of at least one audio file selected by the user, the electronic device displays the reproduction range of the selected at least one audio file so that the reproduction range can be selected. For example, if songs A and B are selected by the user in the electronic device, the electronic device specifically displays reproduction ranges of the selected songs A and B. Thereafter, a specific part (e.g., the entire part, only a verse part, only an intro part, only a bridge part, and only a highlight part) is displayed. For example, the user can select a desired part from the reproduction range of the selected songs displayed on the touch screen of the electronic device, so that only the desired part is reproduced. If the user desires to listen to only the verse part, what the user has to do is to select only the "verse part" from the specific parts displayed in the electronic device.

Thereafter, upon receiving a command for reproducing a specific audio file, the electronic device extracts only each piece of header information from at least one frame included in the specific audio file in step 1303. More specifically, the audio file may consist of a file header and at least one frame. In addition, each frame may consist of a frame header and data. For example, upon receiving a command for reproducing at least one audio file, the electronic device extracts only each piece of header information from at least one frame included in an input audio file without decoding the entire data of at least one input audio file.

Upon extracting only each piece of header information from at least one frame included in at least one audio file, the electronic device extracts side information from the extracted header information in step 1304. More specifically, the frame header is located in a front part of the specific frame, and the frame header includes a data size, decoding information, or the like of the data included in the frame. For example, the header of the specific frame includes the data size, an encoding compression option, bit rate information, side information, and the like. Herein, the electronic device extracts the side information included in the frame header.

After extracting the side information from the extracted header information, the electronic device extracts a global gain value by using information included in the side information in step 1305. More specifically, a global gain value which is an average volume of the respective frames is extracted by extracting the side information from the information included in the frame header. Herein, the global gain value can be defined as the average volume of the respective frames of the side information extracted from the information included in the frame.

Thereafter, the electronic device filters the extracted global gain value in step 1306. More specifically, if the global gain value which is the average volume of the respective frames is extracted in the electronic device, the electronic device connects the extracted global gain values, normalizes the connected global gain values, and smoothes the normalized values. For example, a process of filtering the extracted global gain value may include a process of connecting the extracted global gain values, a process of normalizing the connected global gain values, and a process of smoothing the normalized values. Herein, the connected global gain values are normalized because a great memory capacity is required for data processing in a case of data having a great dynamic range. In addition, the normalized value is smoothed in order to display data in an angular pattern by filtering the value according to a moving average method.

After filtering the extracted global value, the electronic device displays the filtered value in an audio stream waveform pattern in step 1307. More specifically, the electronic device confirms a peak value of the filtered value and displays the entire audio file so that the user can easily identify a specific part among the verse, the intro, the bridge, and the highlight parts. For example, the user can know that a first start part of the audio file is a verse part, and can know that a part which comes after the verse part and which shows a higher peak value than the verse part is an intro part which is a part including a first voice, and can confirm that a part which shows a highest peak value is a highlight part of the audio file. In addition, the user can know that a part which comes after the highlight part and of which a peak value is displayed to be low is a bridge part, and can confirm that a part which shows a higher peak value again is a highlight part.

Thereafter, the electronic device analyzes a waveform of an audio stream, and orderly reproduces only at least one input area in step 1308. More specifically, the electronic device analyzes the waveform of the audio stream, automatically skips to only at least one input area, and orderly reproduces only a corresponding part. For example, if the electronic device receives an input for reproducing only a highlight part of songs A and D selected by the user, the electronic device automatically skips to the highlight part of the songs A and D, and orderly reproduces only a highlight part of the songs A and D. In the related art, there is no method capable of reproducing only a specific part of an audio file and exemplary embodiments of the present invention propose a method capable of reproducing only a specific part of at least one audio file as described above, and thus, advantageously satisfy various desires of the user. Although not shown in FIG. 13, for example, when the user intends to reproduce both of a verse part and a highlight part of the songs A and D, if the user simultaneously selects the "verse part" and the "highlight part" in a specific reproduction range, the electronic device orderly reproduces only the "verse part" and the "highlight part" of the songs A and D.

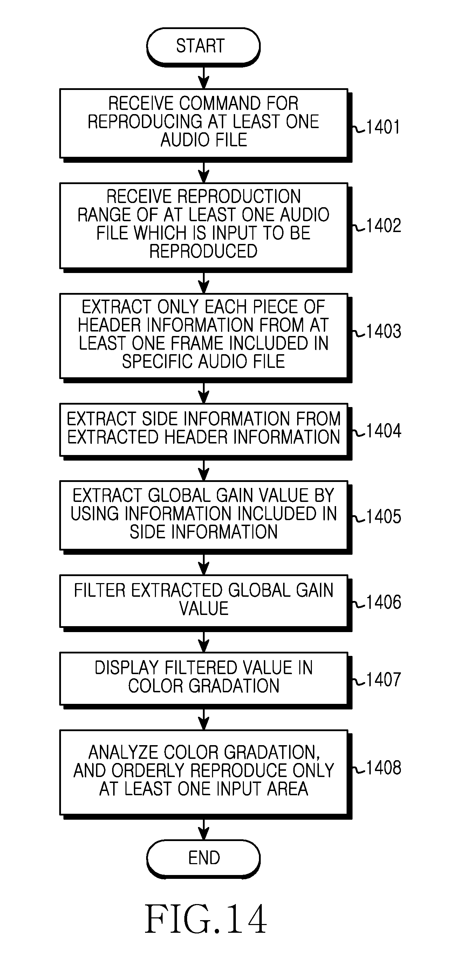

FIG. 14 is a flowchart of orderly reproducing only at least one area by analyzing a color gradation according to an exemplary embodiment of the present invention.

Referring to FIG. 14, the electronic device receives a command for reproducing at least one audio file in step 1401. More specifically, the electronic device receives from a user a command for reproducing at least one audio file selected from at least one audio file stored locally. For example, it is assumed that, when a plurality of audio files are stored in the electronic device, the user intends to reproduce a file by selecting at least one file from the plurality of audio files stored in the electronic device. First, when the electronic device receives a local part selected by the user, the electronic device displays all audio files currently stored therein. Thereafter, at least one audio file can be selected by a user touch from all audio files stored in the electronic device. For example, the user can select at least one song from all audio files stored locally in the electronic device.

Upon receiving a command for reproducing at least one audio file, the electronic device receives a reproduction range of at least one audio file which is input to be reproduced in step 1402. More specifically, in order to select a reproduction range of at least one audio file selected by the user, the electronic device displays the reproduction range of the selected at least one audio file so that the reproduction range can be selected. For example, if songs A and B are selected by the user in the  electronic device, the electronic device specifically displays reproduction ranges of the selected songs A and B. Thereafter, a specific part (e.g., the entire part, only a verse part, only an intro part, only a bridge part, and only a highlight part) is displayed. For example, the user can select a desired part from the reproduction range of the selected songs displayed on the touch screen of the electronic device, so that only the desired part is reproduced. If the user desires to listen to only the verse part, what the user has to do is to select only the "verse part" from the specific parts displayed in the electronic device.

Thereafter, upon receiving a command for reproducing a specific audio file, the electronic device extracts only each piece of header information from at least one frame included in the specific audio file in step 1403. More specifically, the audio file may consist of a file header and at least one frame. In addition, each frame may consist of a frame header and data. For example, upon receiving a command for reproducing at least one audio file, the electronic device extracts only each piece of header information from at least one frame included in an input audio file without decoding the entire data of at least one input audio file.

Upon extracting only each piece of header information from at least one frame included in at least one audio file, the electronic device extracts side information from the extracted header information in step 1404. More specifically, the frame header is located in a front part of the specific frame, and the frame header includes a data size, decoding information, or the like of the data included in the frame. For example, the header of the specific frame includes the data size, an encoding compression option, bit rate information, side information, and the like. Herein, the electronic device extracts the side information included in the frame header.

After extracting the side information from the extracted header information, the electronic device extracts a global gain value by using information included in the side information in step 1405. More specifically, a global gain value which is an average volume of the respective frames is extracted by extracting the side information from the information included in the frame header. Herein, the global gain value can be defined as the average volume of the respective frames of the side  information extracted from the information included in the frame.

Thereafter, the electronic device filters the extracted global gain value in step 1406. More specifically, if the global gain value which is the average volume of the respective frames is extracted in the electronic device, the electronic device connects the extracted global gain values, normalizes the connected global gain values, and smoothes the normalized values. For example, a process of filtering the extracted global gain value may include a process of connecting the extracted global gain values, a process of normalizing the connected global gain values, and a process of smoothing the normalized values. Herein, the connected global gain values are normalized because a great memory capacity is required for data processing in a case of data having a great dynamic range. In addition, the normalized value is smoothed in order to display data in an angular pattern by filtering the value according to a moving average method.

After filtering the extracted global value, the electronic device displays the filtered value in a color gradation in step 1407. More specifically, the electronic device confirms a peak value of the filtered value and displays the entire audio file in a color gradation so that the user can easily identify a specific part among the verse, the intro, the bridge, and the highlight parts. For example, the user can know that a first color displayed on a progress bar is a verse part which is a first start part, can know that a part which comes after the first color and which is displayed with a second color is an intro part including a first voice, and can confirm that a part which comes after the second color and which is displayed with a third color is a first highlight part of the audio file. In addition, the user can know that a part which comes after the third color and which is displayed again with a first color is a bridge part, and can confirm that a part which is displayed with a third color is a second highlighted part. For example, since a section of one audio file can be divided into the verse, the intro, the bridge, and the highlight parts, the user can easily know that a part displayed with the first color is a verse part, a part displayed with the second color after the first color is displayed is an intro part, a part displayed with the third color after the second color is displayed is a first highlight part, a part displayed with the first color is a bridge part, and a part displayed with the third color is a second highlight part.

Thereafter, the electronic device analyzes a color gradation, and orderly reproduces only at least one input area in step 1408. More specifically, the electronic device analyzes an audio stream displayed in a color gradation, automatically skips to at least only one input area, and orderly reproduces only a corresponding part. For example, if the electronic device receives an input for reproducing only a verse part of songs A and C selected by the user, the electronic device automatically skips to the verse part of the songs A and C, and orderly reproduces the verse part of the songs A and C. In the related art, there is no method capable of reproducing only a specific part of an audio file and exemplary embodiments of the present invention propose a method capable of reproducing only a specific part of at least one audio file as described above, and thus, advantageously satisfy various desires of the user. Although not shown in FIG. 14, for example, when the user intends to reproduce both of a verse part and a highlight part of the songs A and C, if the user simultaneously selects the "verse part" and the "highlight part" in a specific reproduction range, the electronic device orderly reproduces only the "verse part" and the "highlight part" of the songs A and C.

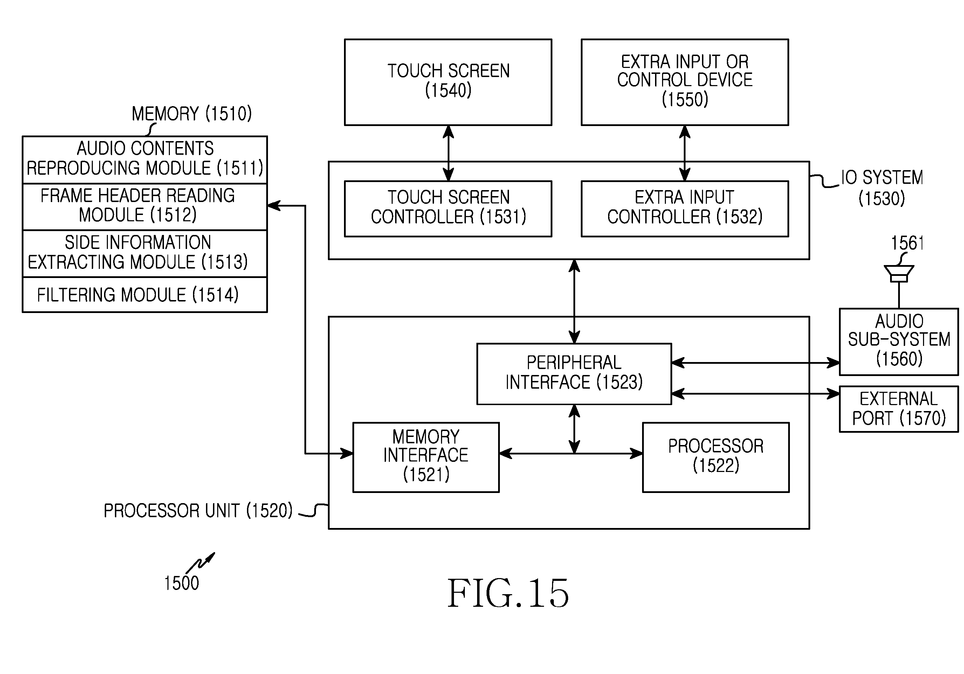

FIG. 15 is a block diagram illustrating a structure of an electronic device according to an exemplary embodiment of the present invention.

Referring to FIG. 15, an electronic device 1500 may be a portable electronic device. Furthermore, the electronic device may be a portable terminal, a mobile phone, a mobile pad, a media player, a tablet computer, a handheld computer, a Personal Digital Assistant (PDA), and the like. In addition, the electronic device may be any portable electronic device including a device which combines two or more functions among these devices.

The electronic device 1500 includes a memory 1510, a processor unit 1520, an Input Output (IO) system 1530, a touch screen 1540, an extra input or control device 1550, an audio sub-system 1560, and an external port 1570.

The memory 1510 stores a software component. The software component includes an audio contents reproducing module 1511, a frame header reading module 1512, a side information extracting module 1513, and a filtering module 1514. In an exemplary embodiment of the present invention, the audio contents reproducing module 1511 reproduces at least one audio file received from a user. The frame header reading module 1512 extracts only each piece of header information from at least one frame included in a specific audio file. The side information extracting module 1513 extracts side information from the extracted frame header information. The filtering module 1514 extracts a global gain value by using information included in the extracted side information.

The processor unit 1520 includes a memory interface 1521, one or more processors 1522, and a peripheral interface 1523. Occasionally, the entire processor unit 1520 may be referred to as a processor. The processor 1522 performs various functions for the electronic device 1500 by executing a variety of software programs, and processes and controls voice communication and data communication. In addition to such a typical function, the processor 1522 also takes a role of executing a specific software module (i.e., an instruction set) stored in the memory 1510 and thus, performing various specific functions corresponding to the module. For example, the processor 1522 performs the method of the exemplary embodiment of the present invention by interworking with software modules stored in the memory 1510. In addition, the processor 1522 may include one or more data processors, an image processor, or a codec. The data processor, the image processor, or the codec can be configured separately. In addition, these elements can be configured as several processors each of which performs a different function. The peripheral interface 1523 connects various peripheral devices of the electronic device 1500 to the processor 1522 and the memory 1510 (via the memory interface).

In an exemplary embodiment of the present invention, the processor unit 1520 filters extracted respective global gain values, connects the extracted respective global gain values, normalizes the connected global gain values, and smoothes the normalized values. In addition, smoothing is performed by using a moving average method, each peak value of the filtered value is confirmed, and the confirmed peak value is matched to any one of pre-set three areas. In addition, only an area of an input part is reproduced, a waveform of an audio stream is analyzed to automatically skip to only the at least one input area, and only the automatically skipped parts are orderly reproduced. In addition, each peak value of the filtered value is confirmed, the confirmed peak value is matched to any one of pre-set three colors, and only an area of the input part is reproduced. In addition, a color gradation is analyzed to automatically skip to only the at least one input area, and only the automatically skipped parts are orderly reproduced.

The I/O system 1530 includes a touch screen controller 1531 and/or an extra input controller 1532. The touch screen controller 1531 can be coupled to the touch screen 1540. Although not limited thereto, the touch screen 1540 and the touch screen controller 1531 can use not only capacitance, resistance, infrared, and surface sound wave techniques for determining one or more contact points but also any multitouch detection technique including other proximity sensor arrays or other elements to detect a contact, a movement, or stopping thereof. The extra input controller 1532 may be coupled to extra input/control devices 1550. The extra input/control devices 1550 may be one or more buttons, a rocker, a switch, a thumb-wheel, a dial, a stick, and/or a pointer device, such as a stylus.

The touch screen 1540 provides an input/output interface between the electronic device 1500 and the user. For example, the touch screen 1540 delivers a touch input of the user to the electronic device 1500. In addition, the touch screen 1540 is a medium which shows to the user an output from the electronic device 1500. For example, the touch screen 1540 shows a visual output to the user. Such a visual output is represented in the form of a text, a graphic, a video, and a combination thereof.

Another embodiment of present disclosure may be a method of operating an electronic device. The method comprises selecting at least two audio files and reproducing each one of a verse, an intro, a bridge, and highlight parts of the at least two files successively. Here, displaying extracted global gain values for reproduced frames of the at least two audio files in an audio stream waveform pattern may be further performed. Methods for described before in the specification for extracting a global gain value of frames, filtering the extracted global gain value and displaying the filtered value may be used in this another embodiment.

A variety of displays can be used as the touch screen 1540. For example, although not limited thereto, the touch screen 1540 may include a Liquid Crystal Display (LCD), a Light Emitting Diode (LED), a Light Emitting Polymer Display (LEPD), an Organic Light Emitting Diode (OLED), an Active Matrix Organic Light Emitting Diode (AMOLED), or a Flexible LED (FLED). In an exemplary embodiment of the present invention, the touch screen 1540 displays a filtered value, receives a command for reproducing a specific audio file, and displays the entire area of the audio file in an audio stream waveform pattern. In addition, the entire area of the audio file is displayed such that it can be divided into a verse, an intro, a bridge, and highlight (i.e., chorus) parts, an input is received for reproducing only any one of the four parts of the area is input, at least one of a plurality of stored audio files is selected, and an input is received for reproducing only at least one of the selected at least one audio file. In addition, the entire area of the audio file is displayed in a color gradation, and the entire area of the audio file is displayed in first to third colors so that it can be divided into the verse, the intro, the bridge, and the highlight parts. In addition, an input is received for reproducing only any one of the four divided parts of the area, at least one of the stored plurality of audio files is selected, and an input is received for reproducing only at least one of the selected one audio file areas.

The audio sub-system 1560 communicates with the user via a speaker 1561 and a microphone (not shown). The audio sub-system 1560 receives a data stream via the peripheral interface 1523 of the processor unit 1520, and converts the received data stream into an electric stream. A converted electric signal is delivered to the speaker 1561. The speaker 1561 converts the electric stream into a sound wave that can be heard by the human user, and outputs the electric stream. The audio sub-system 1560 converts the received electric stream into an audio data stream, and transmits the converted audio data stream to the peripheral interface 1523. The audio sub-system 1560 may include an attachable and detachable ear phone, a headphone, a headset, or the like.

According to an electronic device and a method for high speed visualization of an audio stream, an apparatus and a method capable of high speed visualization of an audio stream without a time latent by analyzing only a frame header can be provided instead of fully decoding the entire data of an audio file to be reproduced.

While the invention has been shown and described with reference to certain exemplary embodiments thereof, it will be understood by those skilled in the art that various changes in form and details may be made therein without departing from the scope of the present invention as defined by the appended claims and their equivalents.

**Claims**

1.   A method of operating an electronic device, the method comprising:

extracting header information from at least two frames included in a specific audio file;
extracting a global gain value, which is an average volume of data of respective frame, for each of the at least two frames by using the extracted frame header information;
filtering each of the extracted global gain values; and
displaying the filtered values.

2.   The method of claim 1, wherein the filtering of each of the extracted global gain values comprises:

connecting the respective extracted global gain value;
normalizing the connected global gain value; and
smoothing the normalized value.

3.   The method of claim 2, wherein the smoothing of the normalized value uses a moving average method.

4.   The method of claim 1, wherein the displaying of the filtered values comprises:

displaying an entire area of the audio file in an audio stream waveform pattern.

5. The method of claim 4, wherein the displaying of the entire area of the audio file in the audio stream waveform pattern comprises:

   displaying the entire area of the audio file so that the entire area can be divided into a verse, an intro, a bridge, and highlight parts.

6. The method of claim 4, wherein the displaying of the entire area so that the entire area can be divided into the four parts comprises:

   confirming each peak value of the filtered value; and
   matching the confirmed peak value to any one of pre-set three areas.

7. The method of claim 5, further comprising:

   receiving an input for reproducing only one of the four divided parts of the area; and
   reproducing only the input part of the area.

8. The method of claim 5, further comprising:

   receiving at least one audio file selected from a plurality of stored audio files;
   receiving an input for reproducing only at least one area among the at least one selected audio file area;
   automatically skipping to only the at least one input area by analyzing a waveform of the audio stream; and
   orderly reproducing only the automatically skipped parts.

9. The method of claim 1, wherein the displaying of the filtered value comprises:

   displaying the entire area of the audio file in a color gradation.

10. The method of claim 9, wherein the displaying of the entire area of the audio file in the color gradation comprises:

    displaying the entire area of the audio file in first to third colors so that the entire area can be divided into a verse, an intro, a bridge, and highlight parts.

11. The method of claim 10, wherein the displaying of the entire area of the audio file in the first to third colors comprises:

    confirming each peak value of the filtered value; and
    matching the confirmed peak value to any one of pre-set three areas.

12. The method of claim 10, further comprising:

    receiving an input for reproducing only one of the four divided parts of the area; and
    reproducing only the input part of the area.

13. The method of claim 10, further comprising:

    receiving at least one audio file selected from a plurality of stored audio files;
    receiving an input for reproducing only at least one area among the at least one selected audio file area;
    automatically skipping to only the at least one input area by analyzing the color gradation; and
    orderly reproducing only the automatically skipped parts.

14. A method of operating an electronic device, the method comprising:

    selecting at least two audio files;
    reproducing each one of a verse, an intro, a bridge, and highlight parts of the at least two files successively,

15. An electronic device comprising a processor unit which is operable to operate the method of any one of claims 1 to 14.

16. A computer program comprising computer program code means adapted to perform all the steps of any one of the method claims 1 to 14 when the computer program is run on a computer.

17. A method of operating an electronic device, the method comprising:

selecting at least two audio files; and
reproducing each one of a verse, an intro, a bridge, and highlight parts of the at least two files successively.

18. The method of claim 17, further comprising displaying extracted global gain values for reproduced frames of the at least two audio files in an audio stream waveform pattern.

FIG.1

202

201

| FILE HEADER | FRAME 1 | FRAME 2 | . . . . . . . . . . . . . . . | FRAME N |
|---|---|---|---|---|

AUDIO FILE

# FIG.2A

204

203

| FRAME HEADER | DATA |
|---|---|

FRAME N

# FIG.2B

FIG.3A

FIG.3B

FIG.4

2nd THRESHOLD ---------------------------------

1st THRESHOLD ---------------------------------

(501)

(502)

(503)

## FIG.5A

(504) (505) (506) (507) (508)

## FIG.5B

(603)

2$^{nd}$ THRESHOLD

(602)

1$^{st}$ THRESHOLD

(601)

## FIG.6A

1$^{st}$ COLOR
(604)

2$^{nd}$ COLOR
(605)

3$^{rd}$ COLOR
(606)

1$^{st}$ COLOR
(607)

3$^{rd}$ COLOR
(608)

## FIG.6B

FIG.7A

FIG.7B

1st COLOR
(801)

2nd COLOR
(802)

3rd COLOR
(803)

1st COLOR
(804)

3rd COLOR
(805)

1

## FIG.8A

1st COLOR
(801)

2nd COLOR
(802)

3rd COLOR
(803)

1st COLOR
(804)

3rd COLOR
(805)

1

## FIG.8B

| LOCAL ➜ ALL SONGS | |
|---|---|
| SONG A | ☑ |
| SONG B | ☑ |
| SONG C | |
| SONG D | ☑ |
| ⋮ | |

## FIG.9A

| REPRODUCTION RANGE OF SONGS ABD | |
|---|---|
| REPRODUCE ENTIRE PART | |
| REPRODUCE ONLY VERSE PART | |
| REPRODUCE ONLY INTRO PART | |
| REPRODUCE ONLY BRIDGE PART | |
| REPRODUCE ONLY HIGHLIGHT PART | ☑ |
| ⋮ | |

## FIG.9B

SONGS A(BC)

(901)

## FIG.9C

| LOCAL → ALL SONGS | |
|---|---|
| SONG A | ☑ |
| SONG B | ☐ |
| SONG C | ☑ |
| ONG D | ☐ |
| ⋮ | |

## FIG.10A

| REPRODUCTION OF SONG A AND C |
|---|
| REPRODUCE ENTIRE PART |
| REPRODUCE ONLY VERSE PART   ☑ |
| EPRODUCE ONLY INTRO PART |
| REPRODUCE ONLY BRIDGE PART |
| REPRODUCE ONLY HIGHLIGHT PART |
| ⋮ |

## FIG.10B

| SONGS A(C) | 🔊 |
|---|---|

(1001)

⏮    ▶    ⏭

## FIG.10C

START

RECEIVE COMMAND FOR
REPRODUCING SPECIFIC AUDIO
FILE ∿1101

EXTRACT ONLY EACH PIECE OF
HEADER INFORMATION FROM AT
LEAST ONE FRAME INCLUDED IN
SPECIFIC AUDIO FILE ∿1102

EXTRACT SIDE INFORMATION FROM
EXTRACTED HEADER INFORMATION ∿1103

EXTRACT GLOBAL GAIN VALUE BY
USING INFORMATION INCLUDED IN
SIDE INFORMATION ∿1104

FILTER EXTRACTED GLOBAL GAIN
VALUE ∿1105

DISPLAY FILTERED VALUE IN AUDIO
STREAM WAVEFORM PATTERN ∿1106

END

FIG.11

START

RECEIVE COMMAND FOR
REPRODUCING SPECIFIC AUDIO
FILE ~1201

EXTRACT ONLY EACH PIECE OF
HEADER INFORMATION FROM AT
LEAST ONE FRAME INCLUDED IN
SPECIFIC AUDIO FILE ~1202

EXTRACT SIDE INFORMATION FROM
EXTRACTED HEADER INFORMATION ~1203

EXTRACT GLOBAL GAIN VALUE BY
USING INFORMATION INCLUDED IN
SIDE INFORMATION ~1204

FILTER EXTRACTED GLOBAL GAIN
VALUE ~1205

DISPLAY FILTERED VALUE IN
COLOR GRADATION ~1206

END

FIG.12

START

RECEIVE COMMAND FOR REPRODUCING AT LEAST ONE AUDIO FILE ～1301

RECEIVE REPRODUCTION RANGE OF AT LEAST ONE AUDIO FILE WHICH IS INPUT TO BE REPRODUCED ～1302

EXTRACT ONLY EACH PIECE OF HEADER INFORMATION FROM AT LEAST ONE FRAME INCLUDED IN SPECIFIC AUDIO FILE ～1303

EXTRACT SIDE INFORMATION FROM EXTRACTED HEADER INFORMATION ～1304

EXTRACT GLOBAL GAIN VALUE BY USING INFORMATION INCLUDED IN SIDE INFORMATION ～1305

FILTER EXTRACTED GLOBAL GAIN VALUE ～1306

DISPLAY FILTERED VALUE IN AUDIO STREAM WAVEFORM PATTERN ～1307

ANALYZE WAVEFORM OF AUDIO STREAM, AND ORDERLY REPRODUCE ONLY AT LEAST ONE INPUT AREA ～1308

END

# FIG.13

START

RECEIVE COMMAND FOR
REPRODUCING AT LEAST ONE
AUDIO FILE ~1401

RECEIVE REPRODUCTION
RANGE OF AT LEAST ONE AUDIO
FILE WHICH IS INPUT TO BE
REPRODUCED ~1402

EXTRACT ONLY EACH PIECE OF
HEADER INFORMATION FROM AT
LEAST ONE FRAME INCLUDED IN
SPECIFIC AUDIO FILE ~1403

EXTRACT SIDE INFORMATION FROM
EXTRACTED HEADER INFORMATION ~1404

EXTRACT GLOBAL GAIN VALUE BY
USING INFORMATION INCLUDED IN
SIDE INFORMATION ~1405

FILTER EXTRACTED GLOBAL GAIN
VALUE ~1406

DISPLAY FILTERED VALUE IN
COLOR GRADATION ~1407

ANALYZE COLOR GRADATION,
AND ORDERLY REPRODUCE ONLY
AT LEAST ONE INPUT AREA ~1408

END

FIG.14

FIG.15

EP 2 669 893 A2